# EUROPÄISCHE PATENTSCHRIFT

(11) **EP 2 129 548 B1**
(45) Veröffentlichungstag und Bekanntmachung des Hinweises auf die Patenterteilung: **27.04.2011**
(21) Anmeldenummer: 08715687.3
(22) Anmeldetag: 04.02.2008
(51) Int. Cl.: B60R 1/00, G06T 3/00, G06T 5/00, G06T 5/50, G06T 7/00, G06T 7/20, G06K 9/00, H04N 7/18, B60K 31/00, B60R 21/013

(54) **VERFAHREN UND VORRICHTUNG ZUR DETEKTION VON NACHFOLGENDEN FAHRZEUGEN IN EINEM KRAFTFAHRZEUG**
METHOD AND DEVICE FOR THE DETECTION OF FOLLOWING VEHICLES IN A MOTOR VEHICLE
PROCÉDÉ ET DISPOSITIF DE DÉTECTION DE VÉHICULES SUIVANTS DANS UN VÉHICULE À MOTEUR

(30) Priorität: 26.02.2007 EP 07003927; 18.07.2007 DE 102007033735
(43) Veröffentlichungstag der Anmeldung: 09.12.2009
(73) Patentinhaber: Volkswagen Aktiengesellschaft, 38436 Wolfsburg (DE)
(72) Erfinder: GRAF, Thorsten, 38518 Gifhorn (DE); SCHÖNING, Volkmar, 30900 Wedemark (DE); WAHL, Friedrich, 38802 Wolfenbüttel (DE); RILK, Markus, 38102 Braunschweig (DE); WINKELBACH, Simon, 38124 Braunschweig (DE)
(74) Vertreter: Meyer, Enno
(86) Internationale Anmeldenummer: PCT/EP2008/000862
(87) Internationale Veröffentlichungsnummer: WO 2008/104263

(56) Entgegenhaltungen:
- EP-A- 1 646 008
- EP-A- 1 830 321
- US-B1- 6 985 172
- NIEMANN H ET AL: "INTEGRATED MOTION AND GEOMETRY BASED OBSTACLE DETECTION IN IMAGE SEQUENCES OF TRAFFIC SCENES" PROCEEDINGS OF THE SPIE, SPIE, BELLINGHAM, VA, Bd. 2736, 8. April 1996 (1996-04-08), Seiten 228-239, XP008052435 ISSN: 0277-786X

## Beschreibung

Die Erfindung betrifft ein Verfahren und eine Vorrichtung zur Detektion nachfolgender Fahrzeuge eines Kraftfahrzeugs mittels mindestens einer in dem Kraftfahrzeug angeordneten Rückfahrkamera gemäß dem Anspruch 1 bzw. dem Anspruchs 9.

Auffahrunfälle treten im Straßenverkehr häufig auf und können oftmals zu Verletzungen im Halsbereich der Fahrzeuginsassen führen. Es wäre daher zum Treffen entsprechender Sicherheitsvorkehrungen im Fahrzeug wünschenswert nachfolgende Fahrzeuge detektieren und gegebenenfalls die verbleibende Zeit bis zum Eintreten einer Kollision bestimmen zu können, um beispielsweise Rückenlehnen und/oder Nackenstützen in eine geeignetere Position zu bringen, Sicherheitsgurte vorzustraffen, etc., um so den Schweregrad von Verletzungen herabsetzen zu können oder eine Ausweichtrajektorie zu berechnen und gegebenenfalls auszuführen.

Eine Anzahl von Algorithmen zur Detektion nachfolgender Fahrzeuge mit unterschiedlichen Stärken und Schwächen wurde bislang vorgeschlagen. Dabei unterteilen die meisten dieser Algorithmen den Erkennungsprozeß in zwei Schritte, nämlich in einen ersten Schritt, in dem ein Hypothese über die mögliche Position des nachfolgenden Fahrzeugs aufgestellt wird, und einen zweiten Schritt, in dem die Hypothese verifiziert wird.

Für den ersten Schritt, der Aufstellung einer Hypothese, kommen oft sogenannte wissensbasierte Verfahren (knowledge based methods) zum Einsatz. Dabei werden oftmals das Vorhandensein von Symmetrien in den rückwärtigen Ansichten ausgenutzt, wobei es sich um farbliche Symmetrien, Grauwertsymmetrien, Symmetrien bezüglich vertikaler oder horizontaler Kanten oder andere Symmetrien handeln kann. Das auftretende Problem solcher Symmetrien ausnutzender Verfahren liegt darin begründet, dass die Kanten oder Begrenzungen nachfolgender Fahrzeuge oftmals nicht vollständig sichtbar sind oder dass andere Objekte, die keine Fahrzeuge sind, bessere Symmetriewerte als das nachfolgende Fahrzeug aufweisen.

Farbinformationen über die hinter dem Eigenfahrzeug befindliche Situation sind ebenfalls nützliche Parameter, aber ihre Integration in Detektionssysteme ist mit Schwierigkeiten verbunden. So kann beispielsweise ein Blenden der Sonne lokale und globale Farbeigenschaften innerhalb des detektierten Bildes verändern.

In einigen Fällen ist es ausreichend, die Ecken des nachfolgenden Fahrzeugs, d.h. die Kontur, als einfaches Rechteck für die Hypothesegenerierung zu modellieren. Robustere Parameter sind üblicherweise horizontale und vertikale Kanten des nachfolgenden Fahrzeugs. Vertikale Kanten können jedoch auch durch Schatten unterhalb des nachfolgenden Fahrzeugs verursacht werden, wobei Schatten in den meisten Szenarios vorhanden sind und diese mehr oder weniger unabhängig vom Typ des nachfolgenden Fahrzeugs sind. Es ist möglich, auch diese Schatteninformationen in die Fahrzeugdetektion einfließen zu lassen.

Weiterhin ist die Textur ein weiteres für die Detektion nachfolgender Fahrzeuge im Prinzip interessantes Merkmal, wobei jedoch eine Information der Textur eines nachfolgenden Fahrzeugs bei der Verwendung von Kameras mit niedriger Auflösung aufgrund des Abstands bislang kaum für eine Detektion verwendbar ist.

Allgemein gilt ferner, dass die Verläßlichkeit der oben genannten Informationen üblicherweise von weiteren Parametern wie beispielsweise dem Abstand zwischen den Fahrzeugen, den Wetterbedingungen, der Art der Fahrzeuge wie beispielsweise PKW oder LKW, usw., abhängt. Daher ist es äußerst schwierig, einen Algorithmus zur Detektion nachfolgender Fahrzeuge zu entwickeln, der nur auf derartigen Informationen basiert.

Für den ersten Schritt der Generierung einer Hypothese über den möglichen Ort des nachfolgenden Fahrzeugs ist es auch möglich ein auf die Geschwindigkeit des nachfolgenden Fahrzeuges abgestelltes Verfahren zu verwenden. Ist die Geschwindigkeit des nachfolgenden Fahrzeugs relativ zum Eigenfahrzeug bekannt, so kann die Richtung des Bewegungsvektors der Fahrzeugpixel bestimmt werden. Unter der Annahme, dass die Fahrbahn durch eine bekannte Ebene gebildet wird, kann man den Betrag der Bewegungsvektoren der zur Fahrbahn gehörigen Pixel schätzen. Pixel mit einem davon unterschiedlichen Bewegungsvektor können dann als nicht zur Fahrbahn gehörend klassifiziert werden.

Masken oder Schablonen basierende Verfahren (template based methods) werden zum Durchführen des zweiten Schrittes, der Verifikation der Hypothese, vorgeschlagen. Diese versuchen das nachfolgende Fahrzeug mit einer abstrakten Schablone, beispielsweise ein das Fahrzeug umschließendes Rechteck mit vorgegebenen Seitenverhältnissen, zu beschreiben. Andere Verfahren zur Durchführung des zweiten Schritts der Fahrzeugerkennung verwenden Tralningsverfahren wie neuronale Netze oder gestützte Vektorautomaten (support vector machines). Das Problem hier besteht in der Erzeugung von Trainingsdaten für alle möglichen Verkehrssituationen wie beispielsweise unterschiedlichste Wetterbedingungen.

In der DE 102 50 021 A1 wird nun ein Rückfahrkamerasystem eines Kraftfahrzeugs beschrieben, das zum Auffinden eines geeigneten Parkplatzes dient sowie zum automatischen Einparken verwendet werden kann. Das System verwendet zur Detektion eines geeigneten Parkplatzes eine Rückfahrkamera mit einem Weitwinkelobjektiv, wobei das aufgenommene Bild entzerrt und in eine Draufsicht auf den ermittelten Parkplatz umgerechnet wird.

Druckschrift EP 1 646 008 A1 betrifft ein Verfahren zur Erkennung von Hindernissen im Fahrweg eines Kraftfahrzeugs, wobei mittels einer Kamera ein erstes und zeitlich dazu beabstandet ein zweites Bild der in Fahrtrichtung liegenden Umgebung des Kraftfahrzeugs aufgenommen werden. Die beiden Bilder werden in die Fahrbahnebene transformiert und eine Differenzbild der transformierten Bilder erzeugt. Aus diesem Differenzbild kann dann ermittelt werden, ob sich ein Hindernis im Fahrweg des Fahrzeugs befindet. Dabei wird ausgenutzt, dass eine Abbildung eines zeitlich früheren Gegenstands im ersten Bild aufgrund des größeren Abstands zum Fahrzeug kleiner ist als die Abbildung des Hindernisses im zweiten Bild zu einem späteren Zeitpunkt, da sich das Eigenfahrzeug auf das Hindernis zu bewegt.

Bei allen Verfahren liegt die Hauptschwierigkeit darin die zu detektierenden Objekte unabhängig von der Beschaffenheit der Fahrbahn sowie der Objekte selbst erkennen zu können.

Der Erfindung liegt daher die Aufgabe zugrunde, eine Verfahren und eine Vorrichtung zu schaffen, womit es mit höherer Sicherheit möglich ist, die einem Eigenfahrzeug nachfolgenden Objekte, d.h. Fahrzeuge, unabhängig von der Fahrbahn zu erkennen.

Diese Aufgabe wird durch eine Verfahren mit den Merkmalen des Anspruchs 1 sowie durch eine Vorrichtung mit den Merkmalen des Anspruchs 9 gelöst. Bevorzugte Ausgestaltungen des Verfahren sind Gegenstand der Unteransprüche.

Das erfindungsgemäße Verfahren zur Detektion von einem Eigenfahrzeug nachfolgenden Fahrzeugen mittels mindestens einer im Eigenfahrzeug angeordneten Rückfahrkamera weist die folgenden Schritte auf:
- Aufnehmen von Bildern der hinter dem Eigenfahrzeug rückwärtigen Situation der Fahrzeugumgebung mit der mindestens einen Rückfahrkamera,
- Generierung einer Fahrbahntextur der rückwärtigen Fahrbahn hinter dem Eigenfahrzeug ohne auf der Fahrbahn befindlichen Objekte aus den aufgenommenen Bildern, wobei zur Erzeugung der aktuellen Fahrbahntextur aus dem aktuellen Bild ein Straßenbereich direkt hinter dem Fahrzeug ausgeschnitten und zu der Fahrbahntextur des vorigen Bildes hinzugefügt wird, und
- Differenzbildung zwischen dem aktuellen Bild und der aktuell generierten Fahrbahntextur zur Detektion von Objekten.

Da die verwendeten Rückfahrkameras üblicherweise eine weiten Windelbereich aufnehmen, d.h. es werden Bilder mit dem sog. Fischaugeneffekt erzeugt, wird vorzugsweise jedes aufgenommene Bild entzerrt und in eine perspektivische Ansicht überführt. In einem weiteren Schritt werden die Bilder weiter bevorzugt aus der perspektivischen Ansicht in eine Draufsicht, d.h. Vogelperspektive, transformiert. Der Vorgang wird auch als inverse perspektivische Abbildung (inverse perspective mapping) bezeichnet.

Insbesondere kann die Breite des Ausschnitts aus dem aktuellen Bild vorgegeben sein und die Länge des Ausschnitts ergibt sich aus der Strecke, die zwischen zwei Bildaufnahmen zurückgelegt wird. Mit anderen Worten, aus dem entzerrten und transformierten Bild wird ein Ausschnitt hinter dem Eigenfahrzeug ausgeschnitten und an den Anfang der aus den vorherigen Bildern erzeugten Fahrbahntextur eingefügt, wobei die Eigengeschwindigkeit berücksichtigt werden muss, um eine konsistente aktuelle Fahrbahntextur zu erhalten. Vorzugsweise wird die Fahrbahntextur als Funktion der Geschwindigkeit des Eigenfahrzeugs gespeichert wird.

Vorzugsweise ist der Blickwinkel der mindestens einen Kamera unter einem vorgegebenen Winkel zur Fahrbahn angeordnet, wobei der Winkel zwischen 30° und 40°, vorzugsweise 36° beträgt.

Weiter bevorzugt wird das zeitliche Verhalten erkannter Objekte aus dem aktuellen Bild und den vorherigen aufgenommenen Bildern bestimmt und deren Relativgeschwindigkeit zum Eigenfahrzeug ermittelt, wobei dies durch entsprechende Speicherung der ermittelten Daten, insbesondere dynamische Speicherung der Fahrbahntextur, erzielt wird.

Vorzugsweise kann aus dem aktuellen Abstand eines detektierten Objekts, der Eigengeschwindigkeit des Eigenfahrzeugs und der ermittelten Relativgeschwindigkeit des detektierten Objekts der wahrscheinliche Kollisionszeitpunkt ermittelt werden. Dies ermöglicht es geeignete Maßnahmen zu ergreifen, wenn die Wahrscheinlichkeit eines potentiellen Heckunfalls, d.h. eines Auffahrunfalls, gegeben ist.

Eine erfindungsgemäße Vorrichtung zur Durchführung des im Vorangegangenen erläuterten Verfahrens beinhaltet:
- eine an einem Eigenfahrzeug angeordnete Rückfahrkamera,
- eine Auswerteeinheit, welche die von der Rückfahrkamera aufgenommenen Bilder auswertet, die aktuelle Fahrbahntextur generiert, wobei aus dem aktuellen Bild ein Straßenbereich direkt hinter dem Eigenfahrzeug ausgeschnitten und zu der Fahrbahntextur der vorigen Bilden hinzugefügt wird, nachfolgende Objekte mittels Differenzbildung bestimmt und die Fahrbahntextur dynamisch speichert sowie erkannte Objekte zeitlich verfolgt, und
- eine Einheit zur Berechnung eines Zeitintervall bis zu einer möglichen Kollision aus den Daten der detektierten Objekte und der Eigengeschwindigkeit

Vorzugsweise wird eine am Heck des Eigenfahrzeugs angeordnete Mono-Farbkamera mit vorgegebener Auflösung und Bildwiederholfrequenz verwendet, wobei die Blickrichtung der Kamera und die Fahrbahn einen vorgegebenen Winkel einschließen. Insbesondere kann dieser Winkel zwischen 30° und 40°, vorzugsweise 36° betragen.

Weiter bevorzugt weist die Vorrichtung eine Steuereinheit auf, die Maßnahmen zur Minderung von Unfallfolgen im Falle einer wahrscheinlichen Kollision einleitet. Derartige Maßnahme können beispielsweise ein Straffung der Insassengurte oder eine Optimierung der Position der Nackenstütze sein.

Eine bevorzugte Ausführungsform der Erfindung wird nachfolgend anhand der Zeichnungen erläutert. In den Figuren zeigt
- Fig. 1: ein Eigenfahrzeug mit am Heck angeordneter Rückfahrkamera in schematischer Darstellung.
- Fig. 2: ein rückwärtiges Bild der Rückfahrkamera vor und nach der Entzerrung
- Fig. 3: ein Beispiel der inversen perspektivischen Abbildung eines Bildes,
- Fig. 4: das Aktualisieren der Fahrbahntextur, und ,
- Fig. 5: die Detektion eines nachfolgenden Fahrzeugs in beispielhafter Darstellung.

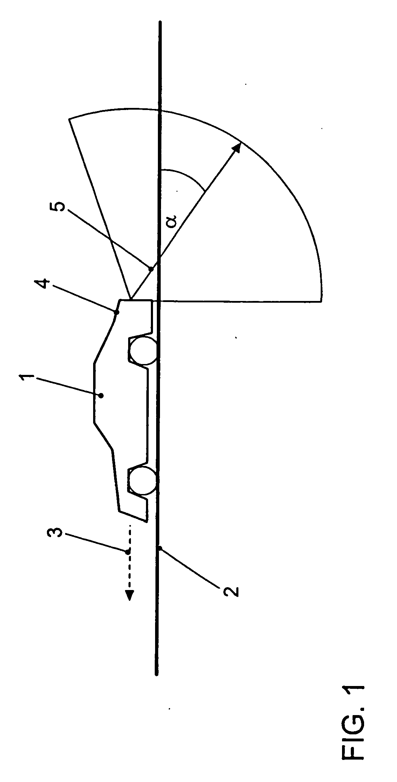

Fig. 1 zeigt in schematischer Darstellung die Anordnung einer Rückfahrkamera an dem Heck 4 eines Kraftfahrzeugs 1, welches sich auf einer Fahrbahn 2 in Fahrtrichtung 3 bewegt. Dabei ist die Kamera so am Heck 4 des Kraftfahrzeugs 1 angeordnet, dass die Blickrichtung 5, d.h. die optische Achse der Kamera, mit der Fahrbahn unter einem vorgegebenen Blickwinkel α angeordnet ist. Dieser Blickwinkel α liegt zwischen 30° und 40°, vorzugsweise beträgt der Blickwinkel 36° bei normalen Lastbedingungen, wobei die Kamera in einer Höhe von ca. 80 cm am Heck montiert ist.

In der bevorzugten Ausführungsform kommt eine einzelne monokulare Farb-CCD-Kamera zum Einsatz, wie sie in einigen Produktlinien als Standardkamera verwendet wird. Eine solche Kamera hat üblicherweise eine Auflösung von 510 x 492 Pixeln und liefert annähernd 60 Halbbilder pro Sekunde im NTSC-Format. Andere Kameras mit anderen Auflösungen und Ausgabeformaten sind selbstverständlich möglich. Der Aperturwinkel in horizontaler Richtung beträgt ca. 131° und derjenige in vertikaler Richtung ca. 100°.

Da die Stellelemente, beispielsweise Motoren für die Verstellung der Nackenstütze, einige Zeit zum Erreichen der vorgesehenen Position im Fall eines Auffahrunfalls benötigen, muss das Beobachtungssystem die Warnung eine Mindestzeit vor dem möglichen Auffahrunfall an die Stellglieder signalisieren. Folglich müssen die nachfolgenden Fahrzeuge so früh als möglich detektiert werden. Allerdings setzt die Auflösung und Anordnung der Kamera am Heck 4 des Fahrzeugs 1 Grenzen hinsichtlich der möglichen Detektionsdistanz. Weiterhin müssen bei der Auswertung Fehler der Kamerakalibrierung berücksichtigt werden.

Generell gilt, dass mit der Verwendung von Rückfahrkameras ein gewisses Maß an a-priori Wissen vorliegt, das verwendet werden kann. So bewegen sich statische Objekte vom Eigenfahrzeug während der Fahrt weg, was eine wichtige Information für eine verlässliche Fahrzeugdetektion darstellt. Ferner wird davon ausgegangen, dass die Fahrbahn annähernd durch eine Ebene approximiert werden kann, was zumindest für einen bestimmten Bereich hinter dem Eigenfahrzeug mit hoher Wahrscheinlichkeit zutrifft. Dabei liegt der Bereich bei der oben genannten Kamera bei ca. 40 m.

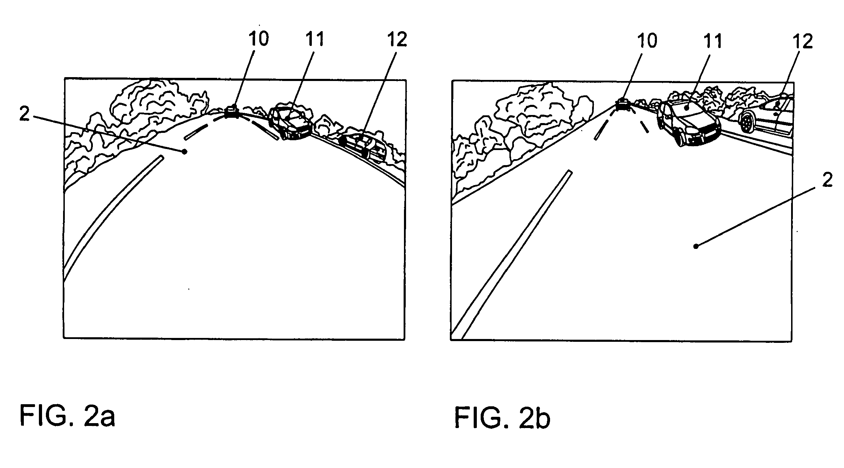

Fig. 2 zeigt in Teil a) ein von der Rückfahrkamera aufgenommenes rückwärtiges Bild der Fahrbahn 2 hinter dem Eigenfahrzeug. Dabei ist in der Eigenspur der Fahrbahn 2 ein entferntes Fahrzeug 10 zu sehen, während auf der in Fahrtrichtung linken Spur ein weiteres Fahrzeug 11 zu erkennen ist, welches sich näher am Eigenfahrzeug1 befindet. Ferner ist auf der Gegenfahrbahn ein sich vom Eigenfahrzeug 1 entfernendes Fahrzeug 12 zu erkennen. Deutlich zu erkennen ist der Fischaugeneffekt des Weitwinkelobjektives der Kamera.

In Teil b) der Fig. 2 ist das entzerrte Bild dargestellt mit den beiden nachfolgenden Fahrzeugen 10 und 11 sowie dem sich entfernenden Fahrzeug 12. Der Algorithmus zum Entzerren der Bilder ist bekannt und bedarf daher keiner näheren Erläuterung.

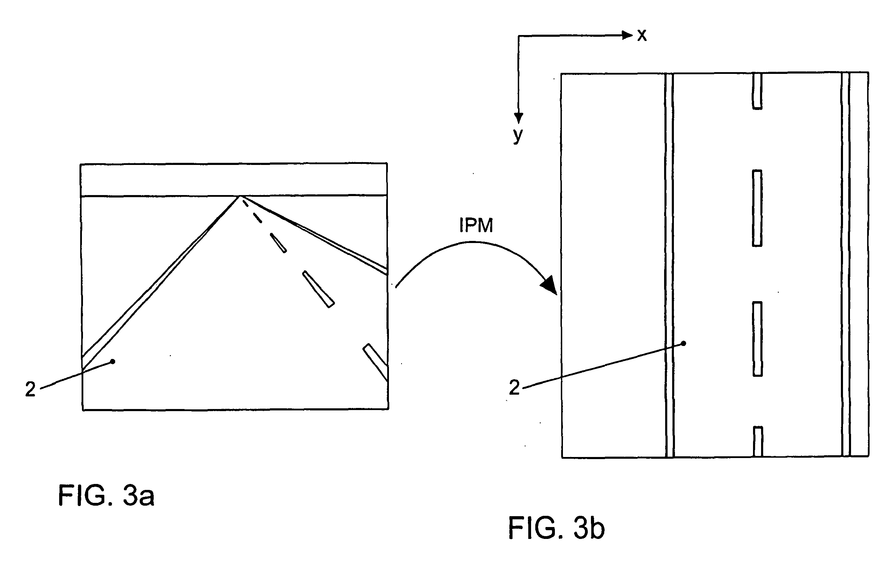

Fig. 3 zeigt in schematischer Darstellung die Wirkung der inversen perspektivischen Abbildung IPM, die beispielsweise in H. Mallot et al.: "Inverse perspective mapping simplifies optical flow computation and obstacle detection", Biological Cybernetics, S 177-185, Vol. 64, No. 3, 1991, beschrieben ist. Eine derartige inverse perspektivische Abbildung kann zur Transformation des in Teil a) dargestellten entzerrten Fahrbahnbildes in die in Teil b) dargestellte Draufsicht oder Vogelperspektive verwendet werden.

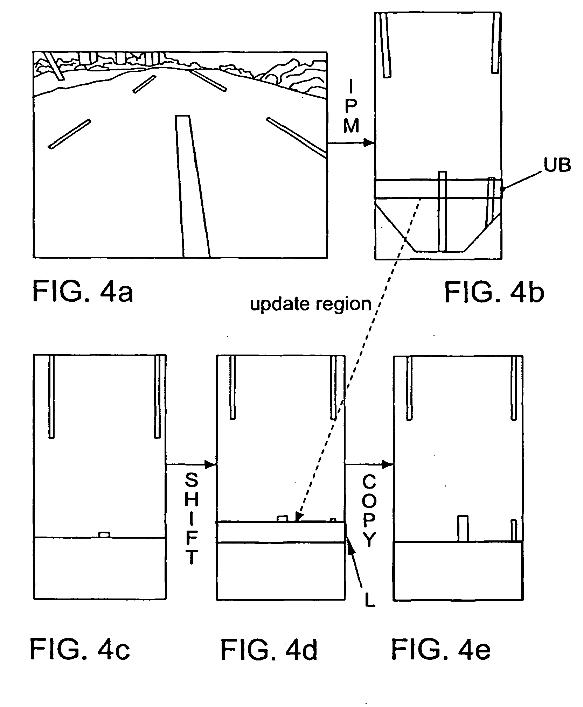

Fig. 4 zeigt nun den Ablauf der Erstellung der aktuellen Fahrbahntextur aus dem aktuellen Bild der Rückfahrkamera, die zur Bestimmung nachfolgender Objekte notwendig ist.

Dabei zeigt Teil a) der Fig. 4 ein entzerrtes Bild zum Zeitpunkt tn der Rückfahrkamera, welches mittels der inversen perspektivischen Abbildung in die in Teil b) dargestellte Draufsicht transformiert wird. In dieser Draufsicht gibt es einen Update-Bereich UP, der in Teil b) als Rechteck eingezeichnet ist. Es ist dies der Fahrbahnbereich, der vom Eigenfahrzeug 1 mit der aktuellen Geschwindigkeit v seit dem vorangegangenen Bild zum Zeitpunkt tn-1 zurückgelegt wurde. Da aufgrund der Bildwiederholfrequenz, der Geschwindigkeit v des Eigenfahrzeugs und der Ausrichtung der Kamera gegenüber der Fahrbahn dies ein Bereich ist, der unmittelbar hinter dem Eigenfahrzeug angeordnet ist, befindet sich in diesem Update-Bereich UB selbst bei höheren Geschwindigkeiten kein nachfolgendes Fahrzeug. Es ist daher möglich, aus einer Mehrzahl derartiger Update-Bereiche zu nacheinanderfolgenden Zeitpunkten nach und nach eine Fahrbahntextur ohne Fahrzeuge zusammenzusetzen und abzuspeichern.

Eine derartig zusammengesetzte Fahrbahntextur zum vorherigen Zeitpunkt tn-1 ist in Teil c) der Fig. 4 dargestellt. Diese Fahrbahntextur zum Zeitpunkt tn-1 wird nun in negativer y-Richtung um den zwischen den Zeitpunkten tn und tn-1 zurückgelegten Weg des Eigenfahrzeugs verschoben. Die so entstehende Lücke L entspricht genau dem Update-Bereich UB des aktuellen Bildes zum Zeitpunkt tn. Dieser Update-Bereich UB wird in die Lücke L einkopiert, so dass sich die in Teil e) der Fig. 4 dargestellt aktuelle Fahrbahntextur zum Zeitpunkt tn ergibt.

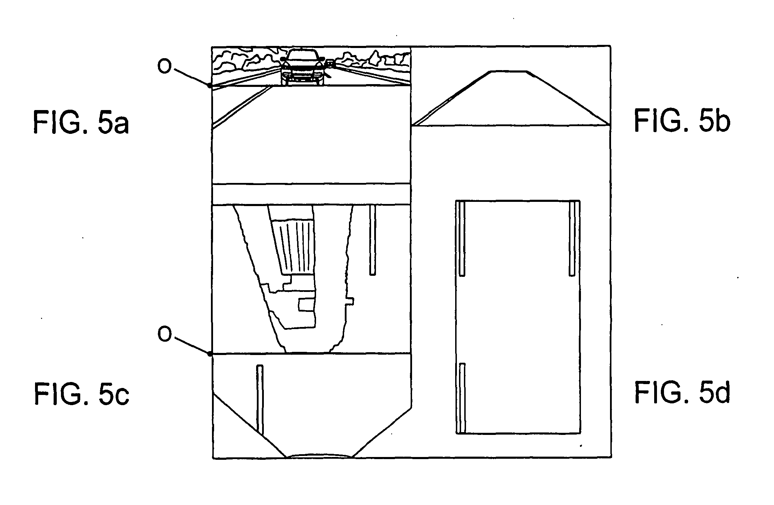

Fig. 5 zeigt nun in schematischer Darstellung die Differenzbildung zwischen aktuellem Bild und aktueller Fahrbahntextur zum Zeitpunkt tn, d.h. die Detektion eines nachfolgenden Objekts bzw. Fahrzeugs. Dabei zeigt Teil a) der Fig. 5 das entzerrte aktuelle Bild der Rückfahrkamera des Eigenfahrzeugs in perspektivischer Darstellung, Teil b) die aktuelle Fahrbahntextur in perspektivischer Darstellung, Teil c) das aktuelle Bild in Draufsicht und Teil d) die aktuelle Fahrbahntextur in Draufsicht. Es ist offensichtlich, dass dort wo eine Differenzbildung des aktuellen Bildes und der aktuellen Fahrbahntextur eine Differenz in den Pixelwerten ergibt, sich ein nachfolgendes Objekt befindet. Unter Berücksichtigung der in der Entfernung reduzierten Auflösung der Rückfahrkamera können so nachfolgende Objekte vermessen werden.

Der Abstand zwischen dem Eigenfahrzeug und dem detektierten nachfolgenden Objekt ergibt sich aus den entsprechenden y-Komponenten, wobei das nachfolgende Objekt O hier durch einen Strich dargestellt ist, der das vordere Ende des nachfolgenden Objekts wiedergibt. Durch dynamisches Speichern der detektierten Objekte über ein entsprechendes Zeitfenster kann daher auch die Relativgeschwindigkeit des nachfolgenden Objekts zum Eigenfahrzeug ermittelt werden, so dass eine Berechnung eines möglichen Kollisionszeitpunktes möglich ist, wodurch die Möglichkeit zum Auslösen entsprechender Maßnahmen gegeben ist.

### BEZUGSZEICHENLISTE

- 1: Eigenfahrzeug
- 2: Fahrbahn
- 3: Fahrtrichtung
- 4: Heck des Eigenfahrzeugs
- 5: Optische Achse der Rückfahrkamera

- 10: nachfolgendes Fahrzeug
- 11: nachfolgendes Fahrzeug
- 12: Fahrzeug in Gegenrichtung

- α: Winkel zwischen optischer Kameraachse und Fahrbahn
- IPM: inverse perspektive Abbildung
- UB: Update-Bereich
- tn: Zeitpunkt des aktuellen Bildes
- tn-1: Zeitpunkt des vorherigen Bildes
- v: Eigenfahrzeuggeschwindigkeit
- L: Lücke
- O: Objekt

## Patentansprüche

1. Verfahren zur Detektion von einem Eigenfahrzeug (1) nachfolgenden Objekten (O) mittels mindestens einer im Eigenfahrzeug (1) angeordneten Rückfahrkamera mit den Schritten:
- Aufnehmen von Bildern der rückwärtigen Situation der Fahrzeugumgebung hinter dem Eigenfahrzeug (1) mit der mindestens einen Rückfahrkamera,
- Generierung einer Fahrbahntextur der rückwärtigen Fahrbahn hinter dem Eigenfahrzeug ohne auf der Fahrbahn befindlichen anderen Objekte(10, 11) aus den aufgenommenen Bildern, wobei aus dem aktuellen Bild ein Straßenbereich (UB) direkt hinter dem Eigenfahrzeug (1) ausgeschnitten und zu der Fahrbahntextur der vorigen Bilder hinzugefügt wird, und
- Differenzbildung zwischen dem aktuellen Bild und der aktuell generierten Fahrbahntextur zur Detektion von Objekten (O).

2. Verfahren nach Anspruch 1, **dadurch gekennzeichnet, dass** die aufgenommenen Bilder entzerrt werden.

3. Verfahren nach Anspruch 1 oder 2, **dadurch gekennzeichnet, dass** die aufgenommenen Bilder in eine Draufsicht transformiert werden.

4. Verfahren nach einem der vorangegangenen Ansprüche, **dadurch gekennzeichnet, dass** die Breite des ausgeschnittenen Straßenbereichs (UB) aus dem aktuellen Bild vorgegeben ist und die Länge des Ausschnitts sich aus der Strecke ergibt, die zwischen zwei Bildaufnahmen zurückgelegt wird.

5. Verfahren nach einem der vorangegangenen Ansprüche, **dadurch gekennzeichnet, dass** die Fahrbahntextur als Funktion der Geschwindigkeit des Eigenfahrzeugs (1) gespeichert wird.

6. Verfahren nach einem der vorangegangenen Ansprüche, **dadurch gekennzeichnet, dass** die Blickrichtung der mindestens einen Kamera unter einem vorgegebenen Blickwinkel α zur Fahrbahn angeordnet ist.

7. Verfahren nach einem der vorangegangenen Ansprüche, **dadurch gekennzeichnet, dass** das zeitliche Verhalten erkannter Objekte (O) aus dem aktuellen Bild und den vorherigen Bildern bestimmt und deren Relativgeschwindigkeit zum Eigenfahrzeug (1) ermittelt wird.

8. Verfahren nach Anspruch 7, **dadurch gekennzeichnet, dass** aus dem aktuellen Abstand eines detektierten Objekts (O), der Eigengeschwindigkeit des Eigenfahrzeugs (1) und der ermittelten Relativgeschwindigkeit des detektierten Objekts (O) der wahrscheinliche Kollisionszeitpunkt berechnet wird.

9. Vorrichtung zur Durchführung des Verfahrens nach einem der vorangegangenen Ansprüche mit
- einer an einem Eigenfahrzeug (1) angeordneten Rückfahrkamera,
- einer Auswerteeinheit, welche die von der Rückfahrkamera aufgenommenen Bilder auswertet, die aktuelle Fahrbahntextur generiert, wobei aus dem aktuellen Bild ein Straßenbereich (UB) direkt hinter dem Eigenfahrzeug (1) ausgeschnitten und zu der Fahrbahntextur der vorigen Bilder hinzugefügt wird, nachfolgende Objekte (O) mittels Differenzbildung zwischen dem aktuellen Bild und der aktuell generierten Fahrbahntextur bestimmt und die Fahrbahntextur dynamisch speichert sowie erkannte Objekte (O) zeitlich verfolgt, und
- einer Einheit zur Berechnung eines Zeitintervall bis zu einer möglichen Kollision aus den Daten der detektierten Objekte (O) und der Eigengeschwindigkeit.

10. Vorrichtung nach Anspruch 9, **dadurch gekennzeichnet, dass** eine am Heck des Eigenfahrzeugs (1) angeordnete Mono-Farbkamera mit vorgegebener Auflösung und Bildwiederholfrequenz verwendet wird, wobei die Blickrichtung der Kamera und die Fahrbahn einen vorgegebenen Winkel einschließen.

11. Vorrichtung nach einem der Ansprüche 9 oder 10, **dadurch gekennzeichnet, dass** die Vorrichtung eine Steuereinheit aufweist, die Maßnahmen zur Minderung von Unfallfolgen im Falle einer wahrscheinlichen Kollision einleitet.

## Claims

1. Method for the detection of following objects (O) in a vehicle (1) in question, by means of at least one rear view camera which is arranged in the vehicle (1) in question, having the steps:
- recording of images of the situation in the surroundings behind the vehicle (1) in question with the at least one rear view camera,
- generation of a carriageway texture of the carriageway behind the vehicle in question without other objects (10, 11) located on the carriageway, from the recorded images, wherein a road area (UB) directly behind the vehicle (1) in question is cut out from the current image and is added to the carriageway texture of the previous images, and
- formation of differences between the current image and the currently generated carriageway texture for the purpose of detecting objects (O).

2. Method according to Claim 1, **characterized in that** the recorded images are equalized.

3. Method according to Claim 1, **characterized in that** the recorded images are transformed into a plan view.

4. Method according to one of the preceding claims, **characterized in that** the width of the cut-out road area (UB) from the current image is predefined and the length of the cutouts results from the section of road which has been travelled along between two image recordings.

5. Method according to one of the preceding claims, **characterized in that** the carriageway texture is stored as a function of the speed of the vehicle (1) in question.

6. Method according to one of the preceding claims, **characterized in that** the viewing direction of the at least one camera is arranged at a predefined viewing angle α with respect to the carriageway.

7. Method according to one of the preceding claims, **characterized in that** the chronological behaviour of detected objects (0) is determined from the current image and the previous images and their relative speed with respect to the vehicle (1) in question is determined.

8. Method according to Claim 7, **characterized in that** the probable collision time is calculated from the current distance from a detected object (O), the speed of the vehicle (1) in question and the determined relative speed of the detected object (O).

9. Device for carrying out the method according to one of the preceding claims, having:
- a rear view camera arranged on the vehicle (1) in question,
- an evaluation unit which evaluates the images recorded by the rear view camera, generates the current carriageway texture, wherein a road area (UB) directly behind the vehicle (1) in question is cut out from the current image and is added to the carriageway texture of the previous images, following objects (O) are determined by forming differences between the current image and the currently generated carriageway texture, and the carriageway texture is stored dynamically and detected objects (O) are tracked chronologically, and
- a unit for calculating a time interval to a possible collision from the data relating to the detected object (O) and the speed of the vehicle (1) in question.

10. Device according to Claim 9, **characterized in that** a mono-colour camera which is arranged at the rear of the vehicle (1) in question and has a predefined resolution and image repetition frequency is used, wherein the viewing direction of the camera and the carriageway include a predefined angle.

11. Device according to one of Claims 9 or 10, **characterized in that** the device has a control unit which initiates measures for reducing the consequences of accidents in the event of a probable collision.

## Revendications

1. Procédé de détection d'un objet (O) suivant un véhicule personnel (1) au moyen d'au moins une caméra de recul disposée dans le véhicule personnel (1) avec les étapes suivantes :
- enregistrement d'images de la situation vers l'arrière de l'environnement du véhicule, derrière le véhicule personnel (1), avec au moins une caméra de recul,
- à partir des images enregistrées, génération d'une texture de chaussée de la chaussée vers l'arrière derrière le véhicule personnel en l'absence d'autres objets (10, 11) se trouvant sur la chaussée, dans lequel on découpe dans l'image actuelle une zone de la chaussée (UB) directement derrière le véhicule personnel (1) et on la surajoute à la texture de chaussée des images précédentes, et
- formation de la différence entre l'image actuelle et la texture de chaussée actuelle générée pour la détection d'objets (0).

2. Procédé selon la revendication 1, **caractérisé en ce qu'**on corrige les distorsions des images enregistrées.

3. Procédé selon la revendication 1 ou 2, **caractérisé en ce que** les images enregistrées sont transformées en vue aérienne.

4. Procédé selon une des revendications précédentes, **caractérisé en ce qu'**on prédéfinit la largeur de la zone de la chaussée (UB) découpée dans l'image actuelle et que la longueur de la découpe découle de la distance parcourue entre deux enregistrements d'images.

5. Procédé selon une des revendications précédentes, **caractérisé en ce que** la texture de la chaussée est stockée en fonction de la vitesse du véhicule personnel (1).

6. Procédé selon une des revendications précédentes, **caractérisé en ce que** la direction vue par au moins une caméra est disposée avec un angle de vue α prédéfini par rapport à la chaussée.

7. Procédé selon une des revendications précédentes, **caractérisé en ce qu'**on définit le comportement temporel des objets reconnus (O) à partir de l'image actuelle et des images précédentes et qu'on détermine leur vitesse relative par rapport au véhicule personnel (1).

8. Procédé selon la revendication 7, **caractérisé en ce qu'**on calcule l'instant probable de collision à partir de la distance actuelle d'un objet détecté (O), de la vitesse propre du véhicule personnel (1) et de la vitesse relative déterminée de l'objet détecté (O).

9. Dispositif pour l'exécution du procédé selon une des revendications précédentes avec
- une caméra de recul disposée sur un véhicule personnel (1),
- une unité d'exploitation qui exploite les images enregistrées par la caméra de recul, qui génère la texture de chaussée actuelle en découpant dans l'image actuelle une zone de la chaussée (UB) directement derrière le véhicule personnel (1) et en la surajoutant à la texture de chaussée des images précédentes, qui détermine les objets suivants (O) au moyen de la formation de la différence entre l'image actuelle et la texture de chaussée actuelle générée et qui stocke dynamiquement la texture de chaussée et suit temporellement les objets reconnus (O), et
- une unité pour le calcul de l'intervalle de temps jusqu'à une éventuelle collision à partir des données des objets détectés (O) et de la vitesse propre.

10. Dispositif selon la revendication 9, **caractérisé en ce qu'**on utilise une caméra monochrome disposée à l'arrière du véhicule personnel (1) avec une résolution et une fréquence de rafraichissement des images prédéfinies, la direction vue par la caméra formant un angle prédéfini avec la chaussée.

11. Dispositif selon une des revendications 9 ou 10, **caractérisé en ce que** le dispositif comporte une unité de commande qui entreprend des mesures pour minimiser les conséquences d'un accident dans le cas d'une collision probable.
